# EUROPEAN PATENT SPECIFICATION

(11) **EP 4 768 160 B1**
(45) Date of publication and mention of the grant of the patent: **28.10.2026**
(21) Application number: 25178774.3
(22) Date of filing: 26.05.2025
(51) Int. Cl.: B23D 59/00, B27B 9/00

(54) **PORTABLE CIRCULAR SAW FOR CUTTING METAL**
TRAGBARE KREISSÄGE ZUM SCHNEIDEN VON METALL
SCIE CIRCULAIRE PORTATIVE POUR COUPER DU MÉTAL

(30) Priority: 31.12.2024 CN 202423321445 U; 31.12.2024 CN 202411997302; 31.12.2024 CN 202411989965
(43) Date of publication of application: 01.07.2026
(73) Proprietor: Nanjing Chervon Industry Co., Ltd., Nanjing, Jiangsu 211106 (CN)
(72) Inventor: WANG, Shisheng, Nanjing, Jiangsu 211106 (CN); LI, Xiao, Nanjing, Jiangsu 211106 (CN); CAO, Zhebin, Nanjing, Jiangsu 211106 (CN)
(74) Representative: Sun, Yiming

(56) References cited:
- CN-A- 112 118 929
- CN-A- 116 096 519
- CN-U- 213 080 259

## Description

### TECHNICAL FIELD

The present application relates to the field of power tools and, in particular, to a portable circular saw for cutting metal.

### BACKGROUND

As a toothed tool, a circular saw may be used for cutting metal. In a cutting process, the circular saw generates metal chips. An upper shield and a dust collection assembly for collecting the metal chips are disposed on the circular saw, and the upper shield covers the outer side of the dust collection assembly. In the process where the metal chips enter the dust collection assembly to be collected, the temperatures of the metal chips are relatively high, so the upper shield has a probability of thermal deformation or even melting.

A portable circular saw for cutting metal, according to the preamble of claim 1 is known from CN213080259U.

### SUMMARY

An object of the present application is to solve or at least alleviate part or all of the preceding problems. To this end, an object of the present application is to provide a portable circular saw with an upper shield that is not easily deformed or melted.

To achieve the preceding object, the present application adopts the technical solutions below.

According to the invention there is provided a portable circular saw (100) for cutting metal, comprising a base (110) comprising a lower surface side abutting against a cut material; and a cutter body (100a) at least partially supported on an upper surface side of the base; wherein the cutter body comprises a circular saw blade (200) protruding towards the lower surface side through a window portion (111) provided on the base, wherein a protruding portion is configured to cut into the cut material; a fixed shield (300) covering an outer circumferential side of the circular saw blade; and a metal chip guide tube (510), wherein the metal chip guide tube is disposed in the fixed shield, surrounds part of the outer circumferential side of the circular saw blade, and comprises a chip guide cavity (513) for guiding a chip; wherein a portion of the metal chip guide tube is covered by the fixed shield;wherein an outer surface area of the metal chip guide tube is denoted as S1, and a surface area of the metal chip guide tube covered by the fixed shield is denoted as S2, where a ratio of S1 to S2 is higher than 1.

In some examples, the ratio of the outer surface area S1 of the metal chip guide tube to the surface area S2 of the metal chip guide tube covered by the fixed shield is higher than or equal to 1.2.

In some examples, the metal chip guide tube is fixed on the fixed shield by a support member.

In some examples, the support member and the fixed shield are integrally formed or are connected to the fixed shield.

In some examples, at least parts of the support member are disposed at two ends of the lower surface of the metal chip guide tube.

In some examples, the at least parts of the support member at the two ends of the lower surface are not in contact.

In some examples, at least part of the lower surface of the metal chip guide tube is exposed to air.

In some examples, the part of the lower surface exposed to air is the position where the chip commonly falls.

In some examples, the upper surface, the left surface, and the right surface of the metal chip guide tube abut against the inner surface of the fixed shield through ribs disposed at intervals.

In some examples, the thermal conductivity of the fixed shield is different from the thermal conductivity of the metal chip guide tube.

In some examples, the heat transfer coefficient of the metal chip guide tube is 15 W/(m²·K).

In some examples, the metal chip guide tube is integrally formed.

In some examples, the ratio of the area of an inlet of the metal chip guide tube to the area of the cross section of the metal chip guide tube located above the circular saw blade is higher than or equal to 2.

In some examples, the area of an inlet of the metal chip guide tube is larger than or equal to 600 mm².

In some examples, the portable circular saw further includes a battery pack configured to power the portable circular saw.

### BRIEF DESCRIPTION OF DRAWINGS

FIG. 1 is a perspective view of a circular saw in an example;
FIG. 2 is a perspective view of the circular saw in FIG. 1 from another angle;
FIG. 3 is a partial exploded view of the fixed shield and chip collection assembly of the circular saw in FIG1;
FIG. 4 is a side view of the circular saw in FIG. 1;
FIG. 5 is a top view of a circular saw including a sealing member in an example;
FIG. 6 is a perspective view of the sealing member in FIG. 5;
FIG. 7 is a partial enlarged view of an auxiliary handle in FIG. 2;
FIG. 8 is a perspective view of a circular saw including a first section and a second section in an example;
FIG. 9 is a side view of a fixed shield in FIG. 8;
FIG. 10 is a side view of a lower end portion in FIG. 8;
FIG. 11 is a diagram showing movement tracks of chips corresponding to the first section and the second section in FIG. 8;
FIG. 12 is a perspective view of the lower end portion and base of a circular saw in an example;
FIG. 13 is a top view of the lower end portion and the base in FIG. 12;
FIG. 14 is a perspective view of the fixed shield and metal chip guide tube of a circular saw in an example;
FIG. 15 is a schematic view of a front side in FIG. 14;
FIG.16 is an exploded view of the fixed shield in FIG. 14;
FIG. 17 is a perspective view of a support portion included by a circular saw in FIG. 16;
FIG. 18 is a schematic view of a hook assembly in FIG. 1 rotated 90 degrees; and
FIG. 19 is a schematic view of a hook assembly in FIG. 1 rotated 180 degrees.

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, Aand/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

In this application, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned unit.

In this application, the term "device", "module" or "unit" may be implemented in the form of hardware or software to achieve specific functions.

In this application, the terms "computing", "judging", "controlling", "determining", "recognizing" and the like refer to the operations and processes of a computer system or similar electronic computing device (e.g., controller, processor, etc.).

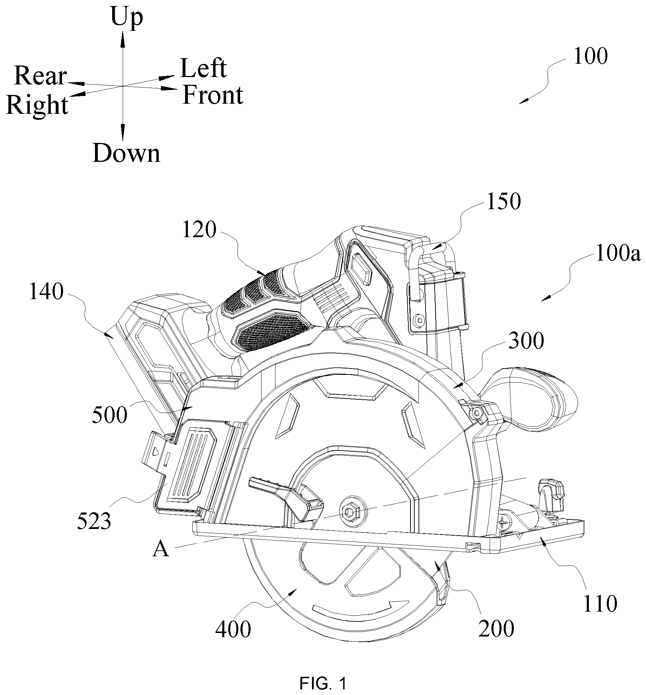

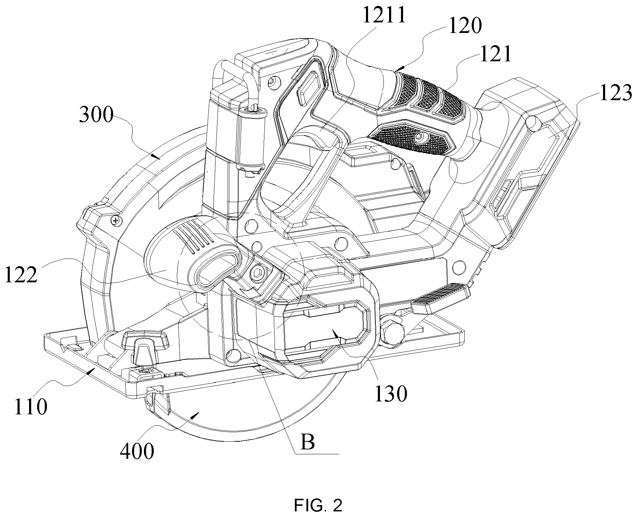

The present application provides a circular saw 100, which is specifically a portable circular saw for cutting metal. As shown in FIGS. 1 and 2, the circular saw 100 includes a base 110, a handle assembly 120, a driving mechanism 130, a battery pack 140, and a cutter body 100a. The cutter body 100a is at least partially supported on the upper surface side of the base 110. The cutter body 100a includes a circular saw blade 200, a fixed shield 300, a movable shield 400, and a chip collection assembly 500. To clearly describe technical solutions of the present application, an upper side, a lower side, a left side, a right side, a front side, and a rear side are also defined, as shown in FIG. 1. The direction in which the circular saw 100 cuts forwards is considered as the front, the direction opposite to the direction in which the circular saw 100 cuts forwards is considered as the rear, the left side of the direction in which the circular saw 100 cuts forwards is considered as the left, and the right side of the direction in which the circular saw 100 cuts forwards is considered as the right.

The base 110 is used as a support platform of the entire circular saw 100. When the circular saw 100 cuts a metal material, the lower surface of the base 110 may abut against the cut material to position the circular saw 100 and the cut material and support the circular saw 100 to a certain extent. The base 110 is caused to abut against the cut material and the circular saw 100 is pushed forwards such that the circular saw 100 can cut and machine the metal material.

The handle assembly 120 is disposed on the upper side of the base 110. A user holds the handle assembly 120 with hands to facilitate the operation of the circular saw 100. The handle assembly 120 includes a main handle 121 and an auxiliary handle 122. The main handle 121 is obliquely disposed so that it is convenient to push the circular saw 100 forwards to perform a cutting operation. The auxiliary handle 122 is disposed at the front end of the main handle 121. The auxiliary handle 122 is used for assisting in holding the circular saw 100 in a cutting process. When the circular saw 100 is used for performing the cutting operation, the user holds the main handle 121 with one hand and holds the auxiliary handle 122 with the other hand for a more stable operation. As shown in FIG. 2, the main handle 121 is provided with a switch 1211. The switch 1211 is a push-button switch. The working state of the circular saw 100 is controlled through the switch 1211, that is, the circular saw 100 is turned on or turned off through the switch 1211.

The driving mechanism 130 is disposed on the upper side of the base 110 and located on a side of the main handle 121. The driving mechanism 130 drives the circular saw blade 200 to rotate about a first axis A to perform a cutting operation. The driving mechanism 130 may be an electric motor. The electric motor and the circular saw blade 200 may be connected to each other directly or through another transmission structure such as a gear transmission structure or a belt transmission structure, which is not limited herein. It is to be understood that the driving mechanism 130 is electrically connected to the switch 1211 and the start and stop of the driving mechanism 130 can be controlled through the switch 1211, thereby controlling the circular saw blade 200 to rotate or stop rotating and controlling the working state of the circular saw 100. Of course, the circular saw 100 may further include a control mechanism, for example, a control circuit board assembly. The switch 1211 and the driving mechanism 130 are electrically connected to the control mechanism separately for the control of the entire machine.

The battery pack 140 mates with a battery pack interface 123 provided on the rear side of the handle assembly 120. The battery pack 140 is detachably coupled to the circular saw 100 through the battery pack interface 123. The battery pack 140 cooperates with a corresponding power supply circuit to power the circular saw 100 so as to drive the driving mechanism 130 to run. It is to be understood by those skilled in the art that a direct current power supply is not limited to the battery pack 140 and may be a built-in rechargeable battery or a standard battery. It is to be understood that the circular saw 100 may power corresponding components in the machine through mains power and an alternating current power supply in conjunction with the corresponding rectifier circuit, filter circuit, and voltage regulator circuit. In the present application, the battery pack 140 is used for a specific power supply description, but the present application cannot be limited thereto. Optionally, the nominal voltage of the battery pack 140 may be 24 V. Optionally, the nominal voltage of the battery pack 140 may be another value, which is not limited in the present application.

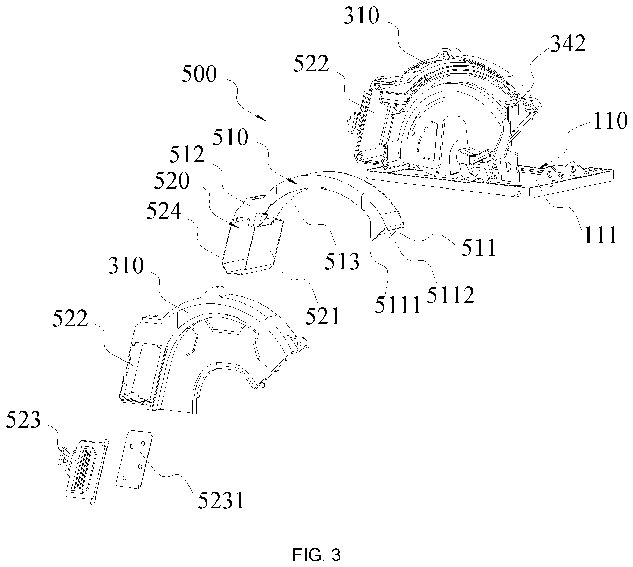

As shown in FIG. 3, the base 110 includes a window portion 111. The window portion 111 is specifically a hollow portion on the base 110. The circular saw blade 200 may be disposed in the window portion 111 of the base 110 and protrude towards the lower surface from the window portion 111 so that part of the circular saw blade 200 is above the base 110 and the other part of the circular saw blade 200 is below the base 110. The circular saw blade 200 is disposed along a front and rear direction in FIG. 1. The part of the circular saw blade 200 protruding from the window portion 111 cuts into the cut material for cutting. The circular saw blade 200 is located on the other side of the main handle 121 opposite to the driving mechanism 130.

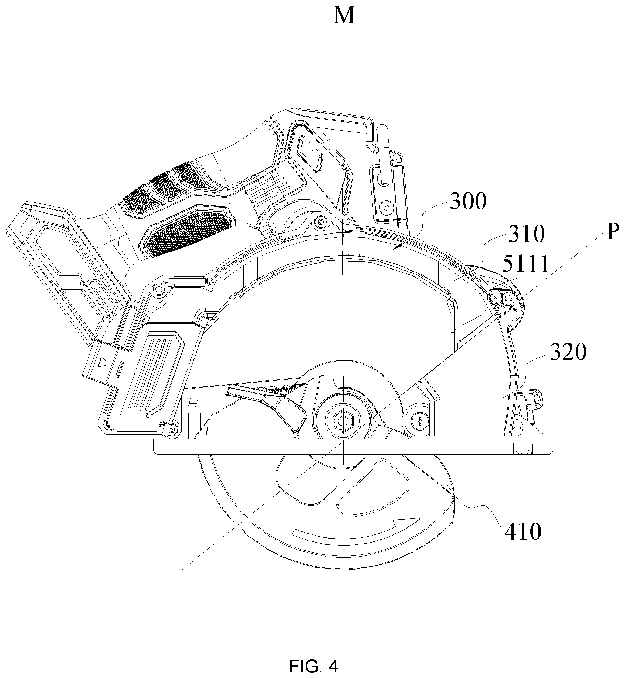

The fixed shield 300 covers part of the outer circumferential side of the circular saw blade 200. On the one hand, the fixed shield 300 can protect the circular saw blade 200, and on the other hand, the fixed shield 300 can block the chips generated when the circular saw blade 200 cuts so as to prevent the chips from splashing. As shown in FIG. 4, the fixed shield 300 includes a main shield 310 and a lower end portion 320. The main shield 310 is fixedly connected to the lower end portion 320. The main shield 310 includes a portion located on the upper side of the circular saw 200 and a portion located rearwards in a cutting direction. The lower end portion 320 is located forwards in the cutting direction. As shown in FIG. 4, a straight line P is a boundary between the main shield 310 and the lower end portion 320 on the fixed shield 300. The lower end portion 320 is located at the front portion of the circular saw blade 200 in the front and rear direction. The main shield 310 includes a portion located at the rear portion of the circular saw blade 200 in the front and rear direction and a portion located at the upper portion of the circular saw blade 200 in an up and down direction. A manner in which the main shield 310 is fixedly connected to the lower end portion 320 is not limited in the present application. Any manner in which the main shield 310 can be firmly connected to the lower end portion 320 may be used.

The movable shield 400 rotates relative to the fixed shield 300 and can cover part of the outer circumferential side of the circular saw blade 200. When the circular saw 100 is not in use, the movable shield 400 is located on the lower side of the base 110 and covers at least part of the portion of the circular saw blade 200 protruding from the lower side of the window portion 111 to prevent the circular saw blade 200 from being exposed and hurting an operator. When the circular saw 100 needs to cut, the movable shield 400 is pushed to rotate along with the movement of the circular saw blade 200 in the cutting process. In addition, the movable shield 400 is pushed to rotate by a different angle based on a different depth to which the circular saw blade 200 cuts into the cut material. After the circular saw 100 stops cutting and is removed from the cut material, the movable shield 400 is automatically reset to an initial protection state shown in FIG. 1. The movable shield 400 is made of a plastic material.

The chip collection assembly 500 is used for guiding and collecting the chips generated when the circular saw 100 cuts metal. As shown in FIG. 3, the chip collection assembly 500 includes a chip guide tube 510 and a dust bin 520. The chip guide tube 510 communicates with the dust bin 520 and is used for guiding the chips. The chips are accumulated into the dust bin 520 after passing through the chip guide tube 510. The chip guide tube 510 is disposed in the fixed shield 300 and is specifically located in the main shield 310. The chip guide tube 510 is a metal chip guide tube. The material of the chip guide tube 510 is different from the material of the fixed shield 300. The metal chip guide tube 510 is used in the following description instead of the chip guide tube 510. The chips generated when the metal is cut have certain temperatures. On the one hand, the metal chip guide tube 510 can avoid damage to the metal chip guide tube 510 caused by the high-temperature chips entering the metal chip guide tube 510. Thus, the service life of the metal chip guide tube 510 is ensured. On the other hand, the metal material has good heat dissipation performance, and the chips can be cooled through collision in a chip guide process, so the chips entering the metal chip guide tube 510 can be cooled. Thus, the temperatures of the chips decrease to low temperatures, and the low-temperature chips are not easily attached to the metal chip guide tube 510.

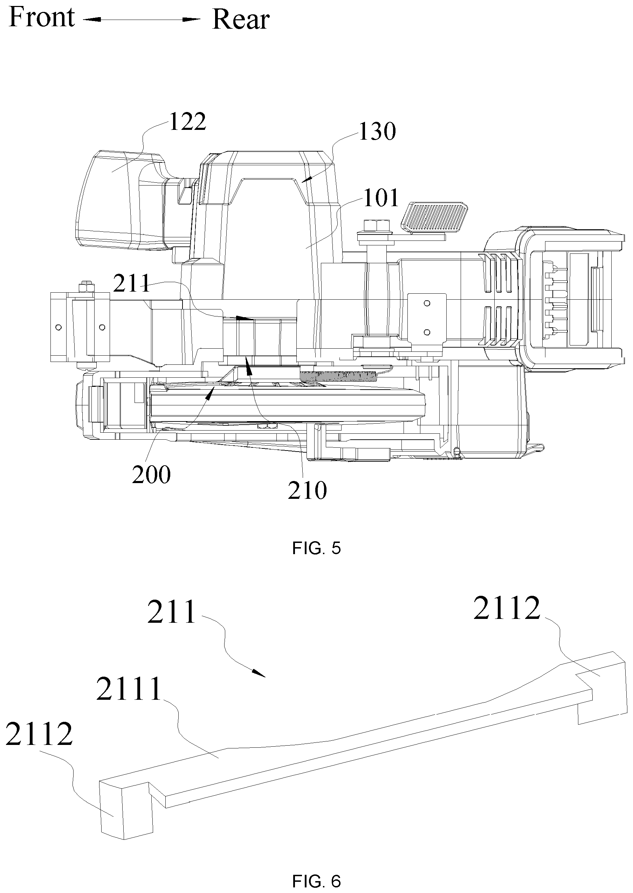

In some examples, as shown in FIG. 5, a gearbox 210 is provided between the driving mechanism 130 and the circular saw blade 200, and the driving mechanism 130 drives, based on the gearbox 210, the circular saw blade 200 to rotate. The circular saw 100 includes a housing assembly 101. The driving mechanism 130 is disposed in the housing assembly 101. The gearbox 210 includes a portion exposed to the housing assembly 101. The housing assembly 101 includes portions surrounding three side surfaces of the gearbox 210. A certain gap exists between the housing assembly 101 and the gearbox 210. As shown in FIG. 5, a sealing member 211 is disposed between the gearbox 210 and the housing assembly 101. Specifically, the sealing member 211 is disposed between the gearbox 210 and the housing assembly 101 where the driving mechanism 130 is located. Optionally, the sealing member 211 may be made of silica gel. Optionally, the sealing member 211 may be made of any material capable of sealing and filling the gap, which is not limited in the present application.

The sealing member 211 includes a first sealing portion 2111 and a second sealing portion 2112. The first sealing portion 2111 and the second sealing portion 2112 are integrally formed. The first sealing portion 2111 is substantially along the front and rear direction and is used for sealing a first side of the housing assembly 101 around the gearbox 210. The second sealing portion 2112 is located on two sides of the first sealing portion 2111 and used for sealing the two opposite sides of the housing assembly 101 around the gearbox 210. A specific shape of the first sealing portion 2111 and a specific shape of the second sealing portion 2112 are not limited in the present application. The first sealing portion 2111 and the second sealing portion 2112 are configured based on a specific shape of the gap between the housing assembly 101 and the gearbox 210, so as to be fully filled into the gap.

Thus, in a working process of the circular saw 100, due to the sealing member 211, the chips generated by cutting do not pass through the gap between the gearbox 210 and the housing assembly 101 and cannot reach the driving mechanism 130 in the housing assembly 101. Accordingly, the disadvantage is avoided that the chips rub against the driving mechanism 130, causing the driving mechanism 130 to have a probability of being damaged and influencing the service life and user experience of the circular saw 100. In addition, the sealing member 211 can be conveniently inserted into the gap between the gearbox 210 and the housing assembly 101, thereby facilitating assembly.

In some examples, as shown in FIGS. 2 and 5, in the front and rear direction, the auxiliary handle 122 is disposed on the front side of the driving mechanism 130 and is connected to the housing assembly 101 where the driving mechanism 130 is located, that is, the auxiliary handle 122 is entirely located on the front side of the main handle 121. In a left and right direction, the auxiliary handle 122 is disposed on the left side of the main handle 121. Therefore, when the user holds the main handle 121 with one hand and holds the auxiliary handle 122 with the other hand to perform the cutting operation, the hand holding the auxiliary handle 122 does not block the user's sight. Thus, in the cutting process, the viewing angle at which the user views a specific cutting situation of the circular saw blade 200 is not blocked, which ensures the accuracy of the cutting operation and improves the user experience.

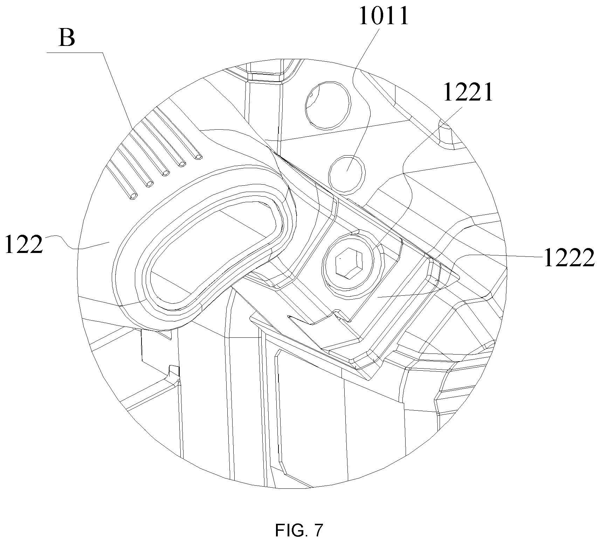

In some examples, as shown in FIG. 7, the auxiliary handle 122 may be connected to the housing assembly 101 through a hexagonal nut 1221 so that it is convenient to detach and mount the auxiliary handle 122. The auxiliary handle 122 further includes a groove 1222. The groove 1222 is used for placing a hexagonal wrench matched with the hexagonal nut 1221. Thus, when detaching or mounting the auxiliary handle 122, the user can directly take the hexagonal wrench from the circular saw 100 without preparing an additional hexagonal wrench. Accordingly, it is more convenient for the user to detach or mount the auxiliary handle 122. As shown in FIG. 7, the housing assembly 101 near the auxiliary handle 122 is further provided with a fixing slot 1011 matched with the hexagonal wrench. When the hexagonal wrench is placed on the auxiliary handle 122, the hexagonal wrench is placed in the groove 1222, and an end portion of the hexagonal wrench is inserted into the fixing slot 1011. Thus, the hexagonal wrench is stably mounted to the auxiliary handle 122, and when the circular saw 100 is used for cutting, the hexagonal wrench does not fall off from the circular saw 100, which ensures the safety of the circular saw 100 in use to a certain extent. To allow the user to take the hexagonal wrench conveniently, when the hexagonal wrench is mounted in the groove 1222, the hexagonal wrench includes a portion protruding from the groove 1222 and located on the front side of the auxiliary handle 122. Thus, the user can easily take out the hexagonal wrench by pulling outwards the protruding portion of the hexagonal wrench on the front side. In addition, the position of the fixing slot 1011 in FIG. 7 is only an example. The fixing slot 1011 may be located at any position allowing the fixing slot 1011 to conveniently mate with the hexagonal wrench to fix the hexagonal wrench. The position of the fixing slot 1011 is not limited in the present application. In addition, the auxiliary handle 122 may be connected to the housing assembly 101 through other forms of assemblies, and a detachment or mounting tool disposed on the auxiliary handle 122 may be changed accordingly, which is not limited in the present application.

In some examples, a specific manner in which the fixed shield 300 is configured has a certain influence on the dust collection efficiency of the circular saw 100, and the fixed shield 300 is specifically described below.

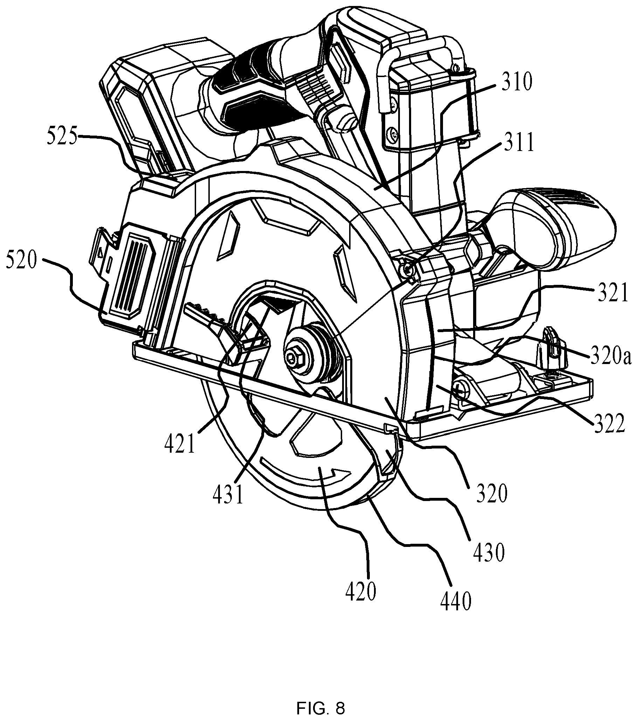

As shown in FIGS. 4 and 8, the main shield 310 of the fixed shield 300 is fixedly connected to the lower end portion 320. The fixed shield 300 is made of a plastic material. The main shield 310 is a non-transparent shield, and the lower end portion 320 is a transparent shield. Thus, when the circular saw blade 200 located in the fixed shield 300 cuts, the user can clearly view the cutting situation through the transparent lower end portion 320 and ensure the accuracy of a cutting position through the transparent lower end portion 320.

In some examples, since the main shield 310 is not transparent and the lower end portion 320 is transparent, the main shield 310 and the lower end portion 320 are fixedly connected together after being formed separately. As shown in FIG. 8, each of the main shield 310 and the lower end portion 320 includes a portion extending outwards. The extending portions are provided with holes so that the portions of the main shield 310 and the lower end portion 320 that extend outwards may be fixedly connected to each other through a screw 311.

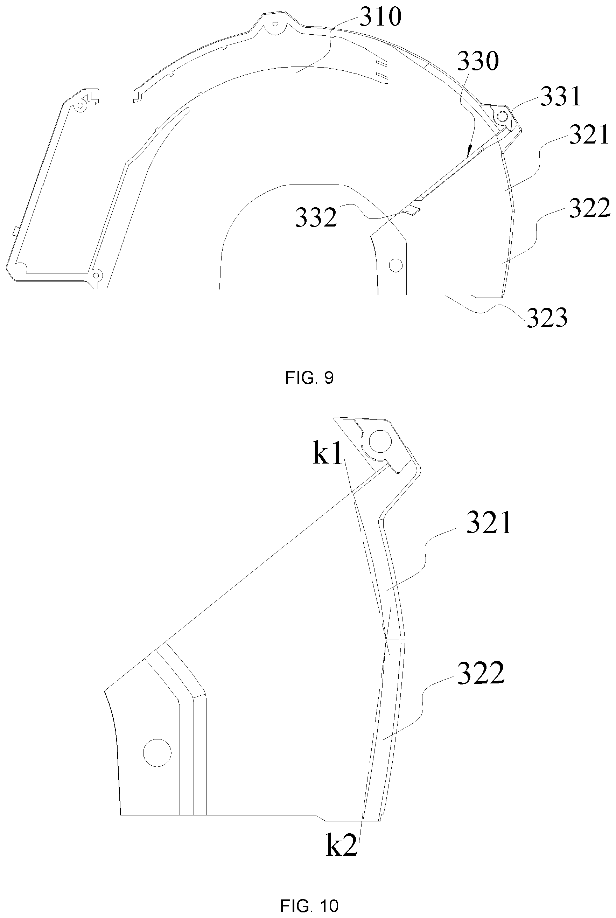

Limit mechanisms 330 are further provided at the joint between the main shield 310 and the lower end portion 320. The limit mechanisms 300 include two limit mechanisms, which are a first limit mechanism 331 and a second limit mechanism 332, respectively. The first limit mechanism 331 is parallel to the joint between the main shield 310 and the lower end portion 320, and the second limit mechanism 332 intersects with the joint between the main shield 310 and the lower end portion 320. The first limit mechanism 331 is relatively long and narrow while the second limit mechanism 332 is relatively short and wide. Optionally, the first limit mechanism 331 is in contact with the second limit mechanism 332. Optionally, the first limit mechanism 331 and the second limit mechanism 332 may not be in contact with each other as shown in FIG. 9, which is not limited in the present application.

In the cutting process of the circular saw 100, since the circular saw blade 200 rotates and generates a rotating wind, the metal chips are blown upwards by the rotating wind and then are blown onto the lower end portion 320 continuously. The outer side of the lower end portion 320 is fixedly connected to the outer side of the main shield 310 through the screw 311. However, there is a probability that the joint between the lower end portion 320 and the main shield 310 is bent outwards due to multiple collisions of the metal chips and the lower end portion is deformed. As a result, the circular saw 100 cannot continue working. The first limit mechanism 331 and the second limit mechanism 332 mentioned above are provided so that the lower end portion 320 can be prevented from being bent outwards. Thus, the lower end portion 320 is tightly connected to the main shield 310, and the working stability of the circular saw 100 is improved.

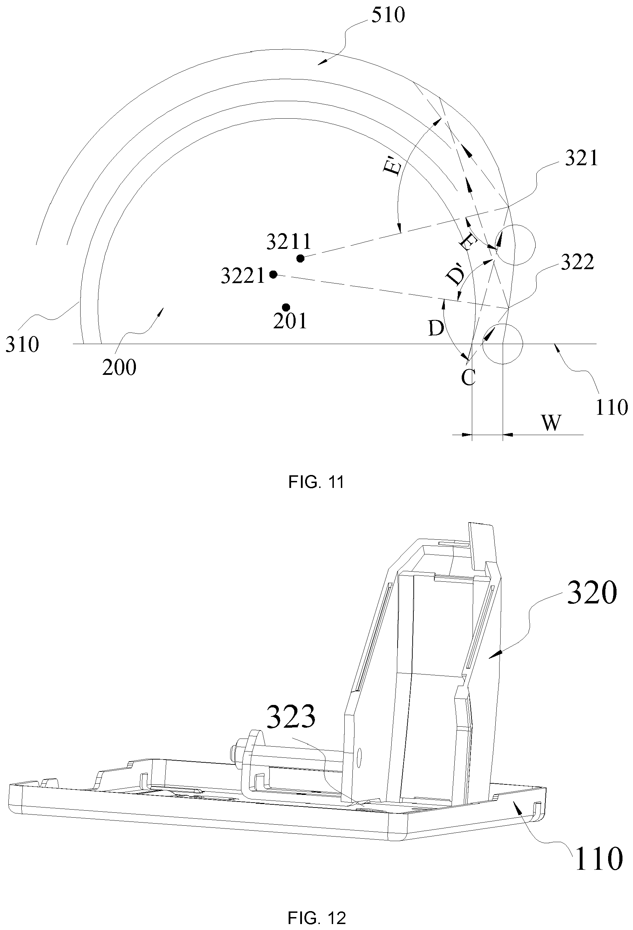

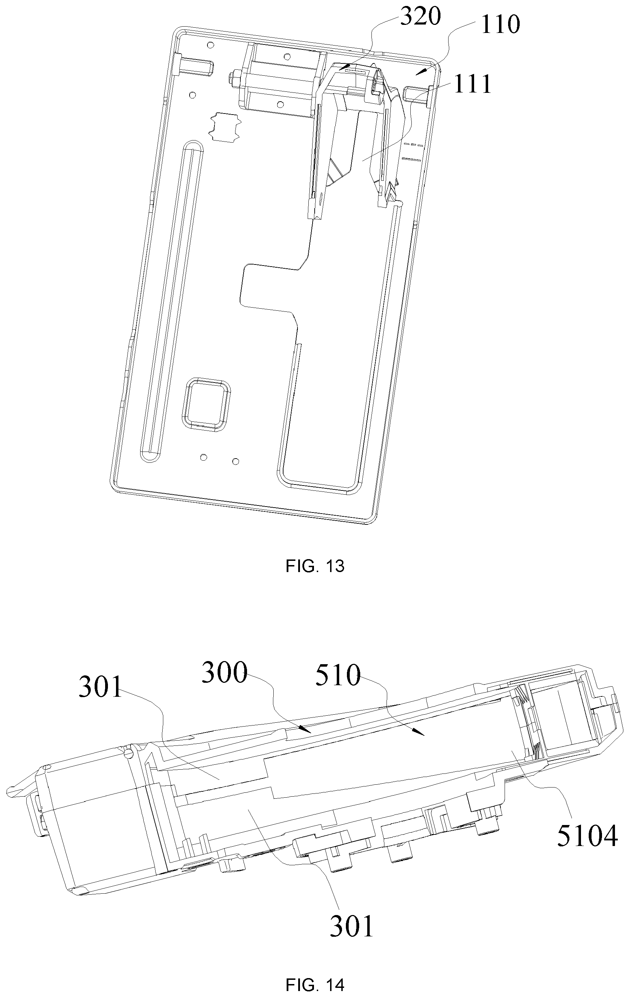

In some examples, as shown in FIGS. 9 and 12, the bottom end 323 of the lower end portion 320 of the fixed shield 300 includes an upward recess such that a certain distance is maintained between the bottom end 323 and the base 110. As shown in FIG. 13, the window portion 111 on the base 110 extends to the edge of the fixed shield 300. Specifically, the window portion 111 extends to the edge of the bottom end 323 so that the window portion 111 has a relatively large area. Thus, when the circular saw 100 cuts, there is a relatively high probability that the chips fall out of the base 110 from the window portion 111, and the chips can splash out from the recess of the bottom end 323 between the base 110 and the lower end portion 320. Accordingly, the probability is reduced that the chips are accumulated between the base 110 and the lower end portion 320, and the probability is reduced that the lower end portion 320 is melted due to the high temperatures of the accumulated chips. Thus, the reliability of the lower end portion 320 is further improved, the effective working life of the circular saw 100 is ensured, and the user experience is improved. In addition, the probability is reduced that the chips are accumulated between the base 110 and the lower end portion 320, and the probability is also reduced that the movable shield 400 located on the lower side of the base 110 is melted or deformed due to the high temperatures, thereby prolonging the service life of the movable shield 400.

As shown in FIG. 8, the lower end portion 320 of the fixed shield 300 includes at least a first section 321 and a second section 322. The first section 321 and the second section 322 are each disposed in the radial direction of the circular saw blade 200. The radial direction of the circular saw blade 200 specifically refers to the extension direction of the plane where the circular saw blade 200 is located. The first section 321 and the second section 322 have different slopes. The first section 321 and the second section 322 are specifically sections corresponding to center lines 320a of the lower end portion 320 shown in FIG. 8. The center lines 320a specifically refer to the center lines of the lower end portion 320 in the left and right direction. In the present application, a specific description is performed by using an example in which each of the center lines of the lower end portion 320 and planes disposed at the left side and right side of the center lines are located on the same plane. That is, sections in a side view of the lower end portion 320 in FIG. 9 and FIG. 10 may represent the first section 321 and the second section 322 corresponding to the center lines. In addition, in some examples, the planes disposed at the left and right sides of the lower end portion 320 are not be on the same plane, which is not specifically described in the present application. In addition, the lower end portion 320 may include three sections, four sections, or any other number of sections more than two sections. The number of sections is not limited in the present application. In addition, the multiple sections have the same specific structure as the first section 321 and the second section 322 in the present application. The multiple sections have different slopes. The details are not repeated in the present application.

In some examples, the first section 321 is a first arc, and the second section 322 is a second arc, that is, the lower end portion 320 is constituted by at least two arcs. In this case, the slope of the section plane where the two endpoints of the first arc are located is the slope of the first section 321, and the slope of the section plane where the two endpoints of the second arc are located is the slope of the second section 322. The first section 321 and the second section 322 in FIG. 10 are both arcs. In this case, the slope of the first arc is k1 shown in FIG. 10, and the slope of the second arc is k2 shown in FIG. 10. The first arc and the second arc may have the same radius or different radii, and the first arc and the second arc may have the same center position or different center positions, which are not limited in the present application. The first arc and the second arc are applicable to the following four situations: the first arc and the second arc have the same radius and the same center position, the first arc and the second arc have the same radius and the different center positions, the first arc and the second arc have the different radii and the same center position, and the first arc and the second arc have the different radii and the different center positions.

In some examples, the first section 321 or the second section 322 is a linear section. That is, one of the first section 321 and the second section 322 is a linear section, and the other section is an arc section. The lower end portion 320 has at least one arc section in the radial direction of the circular saw blade 200. In this case, for the first section 321 and the second section 322, the slope of the linear section is the slope of the corresponding straight line, and the slope of the arc section is the slope of the section plane where the two endpoints are located.

In the present application, a specific description is performed below by using an example in which both the first section 321 and the second section 322 are arc sections. In this case, the first section 321 is a first arc section 321, and the second section 322 is a second arc section 322. The first arc section 321 and the second arc section 322 may have the same radius or the different radii and may have the same center position or the different center positions.

In some examples, at least one of the center of the first arc corresponding to the first section 321 and the center of the second arc corresponding to the second section 322 is located above the center of the circular saw blade 200. That is, at least one of the center of the first arc section 321 and the center of the second arc section 322 is located above the center of the circular saw blade 200. Specifically, when the center of the first arc section 321 is located above the center of the circular saw blade 200, the center of the second arc section 322 may be located at any position on the left side of the center of the circular saw blade 200. Similarly, when the center of the second arc section 322 is located above the center of the circular saw blade 200, the center of the first arc section 321 may be located at any position on the left side of the center of the circular saw blade 200.

In some examples, when the center of the first arc section 321 is located above the center of the circular saw blade 200 and the center of the second arc section 322 is located at any position on the left side of the center of the circular saw blade 200, the connection line from the center of the first arc section 321 to any point on the first arc section 321 is located above the center of the circular saw blade 200, and the connection line from the center of the second arc section 322 to any point on the second arc section 322 is partially located above the center of the circular saw blade 200. Similarly, when the center of the second arc section 322 is located above the center of the circular saw blade 200 and the center of the first arc section 321 is located at any position on the left side of the center of the circular saw blade 200, the connection line from the center of the second arc section 322 to any point on the second arc section 322 is located above the center of the circular saw blade 200, and the connection line from the center of the first arc section 321 to any point on the first arc section 321 is partially located above the center of the circular saw blade 200. When the circular saw 100 cuts, the chips splash onto the first arc section 321 or the second arc section 322. The positional relationships among the centers of the two arcs, the connection lines between the two arcs and the corresponding centers of the two arcs, and the center of the circular saw blade 200 are configured. Thus, the chips splash onto the first arc section 321 or the second arc section 322 at a relatively large angle of incidence and a relatively large angle of reflection so that the chips enter the metal chip guide tube 510 as much as possible to be collected. The angle of incidence has the same degree as the angle of reflection.

In the present application, a specific description is performed by using an example in which the centers of the two arc sections are both located above the center of the circular saw blade 200 and the connection line from each of the centers of the two arc sections to any point on the arc section is located above the center of the circular saw blade 200. As shown in FIG. 11, the center of the circular saw blade 200 is a saw blade center 201, the center of the first arc section 321 is a first center 3211, and the center of the second arc section 322 is a second center 3221. The first center 3211 and the second center 3221 are both located above the saw blade center 201. In addition, the connection line from the first center 3211 to any point on the first arc section 321 and the connection line from the second center 3221 to any point on the second arc section 322 are both located above the saw blade center 201. In FIG. 11, a point at which the circular saw blade 200 cuts is a cutting point C in this case. In addition, FIG. 11 shows an example of a splashing track of the chips splashing onto the first arc section 321 or the second arc section 322 at the cutting point C. When the chips splash onto the first arc section 321, it can be seen from the splashing track in FIG. 11 that the angle of incidence of the chips is an angle E and the angle of reflection of the chips is the angle E'. The degrees of the angle E and the angle E' are equal and both are large so that the chips can enter the metal chip guide tube 510 based on a relatively large angle of incidence and a relatively large angle of reflection. When the chips splash onto the second arc section 322, it can be seen from the splashing track in FIG. 11 that the angle of incidence of the chips is an angle D and the angle of reflection of the chips is the angle D'. The degrees of the angle D and the angle D' are equal and both are large so that the chips can enter the metal chip guide tube 510 based on the relatively large angle of incidence and the relatively large angle of reflection.

Therefore, in the present application, the lower end portion 320 of the fixed shield 300 is configured to include the at least one arc structure. The center of the at least one arc on the lower end portion 320 is located above the center of the circular saw blade 200. The connection line from the center of the at least one arc to any point on the arc is located above the center of the circular saw blade 200. The center of another arc is located on the left side of the center of the circular saw blade 200. Thus, the chips splash onto the lower end portion 320 at the relatively large angle of incidence and the relatively large angle of reflection. Furthermore, the chips can enter the metal chip guide tube 510 as much as possible, thereby improving the dust collection efficiency of the circular saw 100.

In some examples, as shown in FIG. 11, the minimum distance W between a top tooth of the circular saw blade 200 and the lower end portion 320 is greater than or equal to 11 mm and less than or equal to 16 mm. Optionally, the minimum distance W between the top tooth of the circular saw blade 200 and the lower end portion 320 may be 12.3 mm. Optionally, the minimum distance W between the top tooth of the circular saw blade 200 and the lower end portion 320 may be 13 mm. Optionally, the minimum distance W between the top tooth of the circular saw blade 200 and the lower end portion 320 may be 14.5 mm. Optionally, the minimum distance W between the top tooth of the circular saw blade 200 and the lower end portion 320 may be 15mm. The top tooth of the circular saw blade 200 is the saw blade edge of the circular saw blade 200, and the distance from the saw blade edge to the lower end portion 320 is specifically a distance along the radial direction of the saw blade.

The minimum distance between the top tooth of the circular saw blade 200 and the lower end portion 320 is set to be within a reasonable range. Thus, an appropriate space exists between the circular saw blade 200 and the lower end portion 320. Accordingly, the disadvantage is avoided that an excessively large distance between the lower end portion 320 and the front side of the circular saw blade 200 makes it difficult for the rotating wind to blow the chips when the circular saw blade 200 rotates and the chips cannot be efficiently blown into the dust bin 520. In this manner, the dust collection efficiency of the circular saw 100 is improved. In addition, the minimum distance between the top tooth of the circular saw blade 200 and the lower end portion 320 is set to be within the reasonable range. Thus, the disadvantage is avoided that due to an excessively small distance between the lower end portion 320 and the front side of the circular saw blade 200, the chips collide with each other in the lower end portion 320 and deviate from an original track. Accordingly, it is ensured that the chips can be blown into the metal chip guide tube 510 according to the preset track.

In some examples, a specific manner in which the chip collection assembly 500 is configured also has a certain influence on the dust collection efficiency of the circular saw 100, and the chip collection assembly 500 is specifically described below.

As shown in FIG. 3, the chip collection assembly 500 includes the metal chip guide tube 510 and the dust bin 520. The metal chip guide tube 510 surrounds part of the outer circumferential side of the circular saw blade 200. The metal chip guide tube 510 includes a chip guide cavity 513 for guiding the chips and an inlet 511 and an outlet 512 that communicate with the chip guide cavity 513. The inlet 511 is configured to receive the chips reflected by the lower end portion 320 so that the chips enter the chip guide cavity 513 and are guided to the outlet 512 through the chip guide cavity 513. The inlet 511 is provided near the joint between the main shield 310 and the lower end portion 320 to receive the chips reflected by the lower end portion 320. The dust bin 520 communicates with the chip guide cavity 513 so that the chips guided out from the outlet 512 of the metal chip guide tube 510 are collected into the dust bin 520. When the chips are accumulated to a certain extent, the dust bin 520 may be opened and the chips are poured out.

The dust bin 520 includes a metal heat dissipation portion 521 and a non-metal anti-scald portion 522. The metal heat dissipation portion 521 is disposed in the non-metal anti-scald portion 522 and serves as the inner wall of the dust bin 520. The metal heat dissipation portion 521 may be disposed at the bottom and sides of the dust bin 520. Alternatively, the metal heat dissipation portion 521 is disposed on the entire inner wall of the dust bin 520. The metal heat dissipation portion 521 encloses and forms a dust collection cavity for accommodating the chips, so as to accommodate the chips guided by the metal chip guide tube 510. The metal heat dissipation portion 521 is made of a metal material so that the metal heat dissipation portion 521 has better heat dissipation performance. Thus, the high-temperature chips can be prevented from melting the dust bin 520, and the heat dissipation of the chips is also facilitated. The non-metal anti-scald portion 522 is disposed outside the dust bin 520 to form the outer wall of the dust bin 520, which can insulate heat and prevent the dust bin 520 from scalding hands.

As shown in FIG. 3, the non-metal anti-scald portion 522 may be integrally formed with the main shield 310 of the fixed shield 300 through a process such as injection molding. Thus, the number of parts is reduced, thereby helping increase the assembly speed of the entire circular saw 100. Of course, the metal heat dissipation portion 521 of the dust bin 520 and the metal chip guide tube 510 in this example may be integrally formed through processes such as sheet metal bending and stamping. That is, the metal heat dissipation portion 521 of the dust bin 520 and the metal chip guide tube 510 may be an integral metal member. Alternatively, the metal heat dissipation portion 521 and the metal chip guide tube 510 may be separately formed and then assembled. The present application does not impose any limitation in this aspect.

As shown in FIG. 3, the dust bin 520 further includes a box cover 523. The box cover 523 is pivotally connected to the dust bin 520 so that the box cover 523 can be opened, thereby pouring out the chips in the dust bin 520. As shown in FIG. 3, the metal heat dissipation portion 521 covers the inner wall of the dust bin 520. For example, the metal heat dissipation portion 521 further includes a metal sheet 5231 disposed on the inner side of the box cover 523. The box cover 523 is made of a non-metal material and may be specifically made of the same material as the non-metal anti-scald portion 522 and the main shield 310. The metal sheet 5231 can block the chips in the dust bin 520 from the box cover 523, thereby preventing the chips from being in contact with the box cover 523 made of the non-metal material and protecting the box cover 523 from being damaged. Of course, as an alternative example, the dust bin 520 may be a separate component. After the dust bin 520 is processed, the dust bin 520 is assembled and connected to the fixed shield 300 through a retaining member such as a screw as long as the inside of the dust bin 520 communicates with the chip guide cavity 513.

In the present application, as shown in FIG. 1, the box cover 523 is disposed on the right side of the dust bin 520. The right side of the dust bin 520 is the side of the dust bin 520 away from the handle assembly 120. In conjunction with FIGS. 1 and 3, a dust outlet 524 is provided on the right side of the dust bin 520. The box cover 523 covers the dust outlet 524 so that the dust outlet 524 is closed or opened. Since the box cover 523 is disposed on the right side of the dust bin 520 and the metal sheet 5231 is disposed on the inner side of the box cover 523, the metal heat dissipation portion 521 of the dust bin 520 includes the left sidewall, the right sidewall, the front sidewall, the rear sidewall and bottom wall of the dust bin. Thus, the metal heat dissipation portion 521 forms a cylindrical structure to be capable of accommodating the metal chips. The top of the cylindrical structure is open, and the front sidewall of the metal heat dissipation portion 521 extends onto the metal chip guide tube 510 of the fixed shield 300 so that the chips in the metal chip guide tube 510 enter the cylindrical structure from the opening. As shown in FIG. 3, the box cover 523 is pivotally connected to the dust bin 520. The box cover 523 rotates about an axis along the up and down direction. When the box cover 523 is pivotally connected to the dust bin 520, to enable the box cover 523 to be locked on the dust bin 520 when the box cover 523 is closed, the box cover 523 may be locked through a corresponding locking structure, such as a snap connection structure. In addition, the box cover 523 may be connected to the dust bin 520 through engagement. The present application does not impose any limitation in this aspect.

In some examples, as shown in FIG. 8, a visible portion 525 is further disposed on the upper side of the dust bin 520. The visible portion 525 is specifically disposed on the upper side of the non-metal anti-scald portion 522 in the dust bin 520. The visible portion 525 is a transparent component and the metal heat dissipation portion 521 of the dust bin 520 is a cylindrical structure with an open top so that the user can directly view the dust collection situation in the dust bin 520 through the visible portion 525 and can clean the dust bin 520 in time. In the process where the chips enter the dust bin 520 from the metal chip guide tube 510, the chips do not fall to the upper portion of the dust bin 520, so the chips are not in contact with the visible portion 525. Thus, the chips are prevented from being in contact with the visible portion 525 and scratching the visible portion 525, thereby ensuring the user's viewing effect of the dust bin 520. In addition, when normally using the circular saw 100, the user can view the situation in the dust bin 520 at any time through the visible portion 525 disposed on the upper side. In addition, during use, light may penetrate the visible portion 525 on the upper side to reach the bottom of the dust bin 520 so that it is more convenient for the user to view the situation in the dust bin 520.

Optionally, the visible portion 525 may be made of heat-resistant glass, transparent plastics, or other transparent heat-resistant materials. Thus, when some chips are collected in the dust bin 520, causing a relatively high temperature, the service life of the visible portion 525 is ensured. Of course, the entire non-metal anti-scald member 522 may be made of a transparent material. The present application does not impose any limitation in this aspect.

In some examples, the ratio of the area of the inlet 511 of the metal chip guide tube 510 to the area of the cross section of the metal chip guide tube 510 located above the circular saw blade 200 is higher than or equal to 2. The area of the cross section of the metal chip guide tube 510 located above the circular saw blade 200 specifically refers to the area of the cross section of the metal chip guide tube 510 in the left and right direction directly above the rotation center of the circular saw blade 200, that is, the area of the cross section of the chip guide cavity 513 in the left and right direction located directly above the rotation center of the circular saw blade 200 (that is, the center of the circular saw blade 200). The area of the cross section of the metal chip guide tube 510 located above the circular saw blade 200 is specifically the area of the cross section of the metal chip guide tube 510 in the left and right direction corresponding to a straight line M extending in the up and down direction and passing through the rotation center of the circular saw blade 200 as shown in FIG. 4. Optionally, the ratio of the area of the inlet 511 to the area of the cross section of the metal chip guide tube 510 located above the circular saw blade 200 may be 2.25. Optionally, the ratio of the area of the inlet 511 to the area of the cross section of the metal chip guide tube 510 located above the circular saw blade 200 may be 2.5. The ratio of the area of the inlet 511 to the area of the cross section of the metal chip guide tube 510 located above the circular saw blade 200 may be 2.8. The ratio of the area of the inlet 511 to the area of the cross section of the metal chip guide tube 510 located above the circular saw blade 200 may be 3. In addition, the area of the inlet 511 is larger than the area of the cross section of the chip guide cavity 513 at any position thereon.

In some examples, the area of the inlet 511 of the metal chip guide tube 510 is larger than or equal to 600 mm². Optionally, the area of the inlet 511 is 604 mm². Optionally, the area of the inlet 511 is 610 mm². Optionally, the area of the inlet 511 is 623 mm². Optionally, the area of the inlet 511 is 645 mm². Optionally, the area of the inlet 511 is 650 mm².

Based on the range of the area of the inlet 511 of the metal chip guide tube 510 and the range of the ratio of the area of the inlet 511 to the area of the cross section of the chip guide cavity 513 of the metal chip guide tube 510 located above the circular saw blade 200 mentioned above, it can be seen that the inlet 511 of the metal chip guide tube 510 in the present application has a relatively large area. The area of the inlet 511 of the metal chip guide tube 510 is larger than the area of the cross section of the chip guide cavity 513 at any position thereon and much larger than the area of the cross section of the chip guide cavity 513 located directly above the rotation center of the circular saw blade 200. The inlet 511 with the large area is provided so that the chips can easily enter the metal chip guide tube 510. In addition, when a large number of chips are generated, the chips can also conveniently enter the metal chip guide tube 510. Thus, the dust collection efficiency of the circular saw 100 is improved.

In some examples, as shown in FIGS. 3 and 4, a vertical surface 5111 is included at the bottom of the inlet 511 of the metal chip guide tube 510 and extends along the up and down direction. Thus, in the process that the chips are reflected to the inlet 511 through the lower end portion 320, the chips may be reflected to and collide with the vertical surface 5111 and then reflected to the metal chip guide tube 510. The vertical surface 5111 is provided, thereby avoiding the case where the chips are difficult to enter the metal chip guide tube 510 when the chips are reflected through the lower end portion 320 at an inappropriate angle. Accordingly, the dust collection efficiency of the circular saw 100 is further improved.

In the present application, the inlet 511 is configured to have the large area and include the vertical surface 5111. In addition, the lower end portion 320 is configured to include the at least one arc, where the center of the at least one arc on the lower end portion 320 is located above the center of the circular saw blade 200, and the connection line from the center of the at least one arc to any point on the arc is located above the center of the circular saw blade 200. The minimum distance between the lower end portion 320 and the circular saw blade 200 is configured. Therefore, the preceding specific structures comprehensively improve the dust collection efficiency of the circular saw 100, causing the dust collection efficiency of the circular saw 100 to be greater than or equal to 70%. Optionally, the dust collection efficiency of the circular saw 100 is 73%. Optionally, the dust collection efficiency of the circular saw 100 is 75%.

In some examples, in the radial direction of the circular saw blade 200, the distance between the bottom of the inlet 511 of the metal chip guide tube 510 and the center of the circular saw blade 200 is greater than the radius of the circular saw blade 200. As shown in FIG. 3, extension portions 5112 extending outwards are included on two sides of the inlet 511 of the metal chip guide tube 510. The distance between each of the extension portions 5112 and the center of the circular saw blade 200 is greater than the radius of the circular saw blade 200. Optionally, the radius of the circular saw blade 200 is greater than or equal to 68 mm and less than or equal to 75 mm. Optionally, the radius of the circular saw blade 200 is 70 mm. Optionally, the radius of the circular saw blade 200 is 73 mm. Optionally, the distance between the extension portion 5112 and the center of the circular saw blade 200 is greater than 75 mm and less than or equal to 79 mm. Optionally, the distance between the extension portion 5112 and the center of the circular saw blade 200 is 76 mm. Optionally, the distance between the extension portion 5112 and the center of the circular saw blade 200 is 76.8 mm. Optionally, the distance between the extension portion 5112 and the center of the circular saw blade 200 is 78 mm. Optionally, the distance between the extension portion 5112 and the center of the circular saw blade 200 is 78.5 mm. In addition, the radius of the circular saw blade 200 may be another value, and the distance between each of the extension portions 5112 and the center of the circular saw blade 200 may be another distance greater than the radius of the circular saw blade 200, which are not limited in the present application.

According to the invention, a portion of the metal chip guide tube 510 is covered by the fixed shield 300, the outer surface area of the metal chip guide tube 510 is denoted as S1, and the surface area of the metal chip guide tube 510 covered by the fixed shield 300 is denoted as S2, where the ratio of S1 to S2 is higher than 1. That is, the outer surface area S1 of the metal chip guide tube 510 is larger than the surface area S2 of the metal chip guide tube 510 covered by the fixed shield 300, and the fixed shield 300 does not completely cover the metal chip guide tube 510. The outer surface area S1 of the metal chip guide tube 510 specifically refers to the area of the unfolded metal chip guide tube 510, that is, the sum of the areas of the upper surface 5101, the left surface 5102, the right surface 5103, and the lower surface 5104 of the metal chip guide tube 510. The part of the fixed shield 300 covering the metal chip guide tube 510 is specifically the main shield 310. The surface area S2 of the metal chip guide tube 510 covered by the fixed shield 300 is specifically the area of the unfolded main shield 310, that is, the sum of the areas of the main shield 310 covering the upper surface 5101, the left surface 5102, the right surface 5103 and the lower surface 5104. The main shield 310 may directly cover and be in contact with the metal chip guide tube 510. Alternatively, the main shield 310 may indirectly cover the metal chip guide tube 510, where a certain gap exists between the main shield 310 and the metal chip guide tube 510. Optionally, the ratio of S1 to S2 is higher than or equal to 1.2. Optionally, the ratio of S1 to S2 is higher than or equal to 1.35. Optionally, the ratio of S1 to S2 is higher than or equal to 1.4. Optionally, the ratio of S1 to S2 is higher than or equal to 1.5.

According to the invention, as shown in FIG. 14, the fixed shield 300 does not completely cover the metal chip guide tube 510 at the lower side of the metal chip guide tube 510. After the circular saw blade 200 or the movable shield 400 is removed, the bottom of the metal chip guide tube 510 can be viewed from the lower surface side of the base 110 towards the upper surface side of the base 110 along the window portion 111 of the base 110. That is, the lower surface 5104 of the metal chip guide tube 510 is at least partially exposed to air. After the chips are reflected to the metal chip guide tube 510 through the lower end portion 320, most of the chips fall to the lower side of the metal chip guide tube 510 along the movement tracks thereof. The part on the lower side of the metal chip guide tube 510 exposed to the air corresponds to the position where the chips commonly fall. Thus, after the chips fall, since the part is exposed to the air, the heat of the chips can be directly transferred to the air through the metal chip guide tube 510, which helps the chips better dissipate the heat.

In some examples, the metal chip guide tube 510 is fixed on the fixed shield 300 by a support member 301, and at least parts of the support member 301 are disposed at two ends of the lower surface 5104 of the metal chip guide tube 510. Specifically, the at least parts of the support member 301 are disposed at the left and right ends of the lower surface 5104 of the metal chip guide tube 510. Thus, the support member 301 can support the metal chip guide tube 510 to fix the metal chip guide tube 510 in the fixed shield 300. The at least parts of the support member 301 located at the two ends of the lower surface 5104 are not in contact with each other, thereby forming a hollow portion. Thus, the portion exposed to the air is included on the lower side of the metal chip guide tube 510. Optionally, the support member 301 and the fixed shield 300 are integrally formed, the support member 301 serves as part of the fixed shield 300, and the support member 301 and the fixed shield 300 are made of the same plastic material. Optionally, the support member 301 and the fixed shield 300 are separately formed, and the support member 301 is fixedly connected to the fixed shield 300. The support member 301 may be made of the same plastic material as the fixed shield 300. Alternatively, the support member 301 may be made of a metal different from the material of the fixed shield 300. In addition, the support member 301 may be made of other materials. The material of the support member 301 is not limited in the present application. When the support member 301 is made of the plastic material, the hollow support member 301 avoids the disadvantage that the metal chip guide tube 510 has an excessively high temperature and has a probability to melt the support member 301.

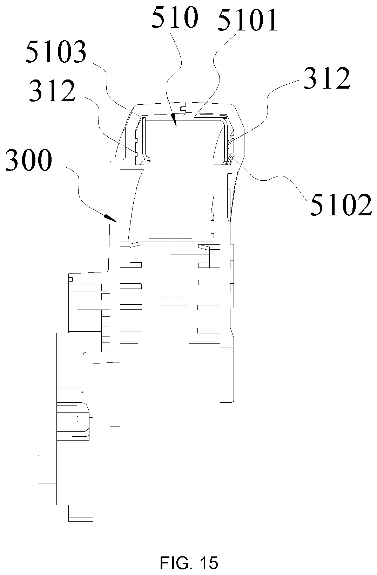

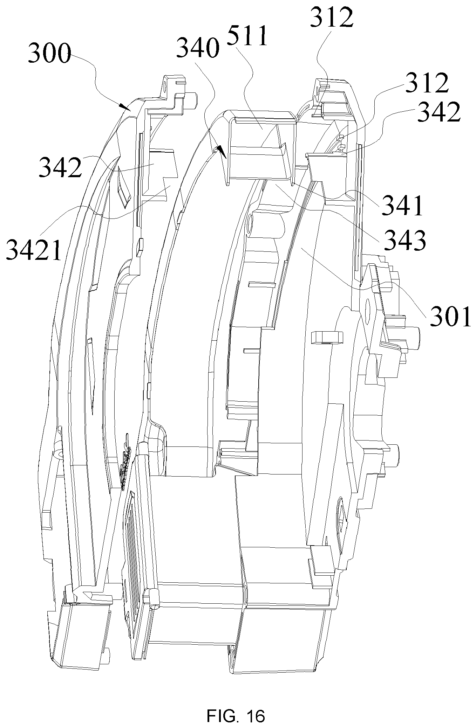

In some examples, multiple ribs 312 are disposed between the metal chip guide tube 510 and the fixed shield 300 so that a certain gap exists between the metal chip guide tube 510 and the fixed shield 300 and the metal chip guide tube 510 is not in direct contact with the fixed shield 300. As shown in FIGS. 15 and 16, the upper surface 5101, the left surface 5102 and the right surface 5103 of the metal chip guide tube 510 abut against the inner surface of the fixed shield 300 through the ribs 312 disposed at intervals. Thus, after the chips enter the metal chip guide tube 510, the heat of the metal chip guide tube 510 can be dissipated through the gap between any two adjacent ribs of the multiple ribs 312, thereby effectively ensuring the heat dissipation performance of the metal chip guide tube 510.

Optionally, the metal chip guide tube 510 is integrally formed so that the metal chip guide tube 510 has good sealing performance, which effectively prevents the chips from leaking from the metal chip guide tube 510 and falling onto the fixed shield 300. As a result, the fixed shield 300 has a probability of being melted and deformed. Optionally, the metal chip guide tube 510 may be formed by welding two half components and then integrally assembled into the fixed shield 300. The welded metal chip guide tube 510 also has good sealing performance and can achieve the same technical effect as the integrally formed metal chip guide tube 510 mentioned above.

In some examples, the thermal conductivity of the fixed shield 300 is different from the thermal conductivity of the metal chip guide tube 510. The thermal conductivity of the metal chip guide tube 510 made of the metal material is greater than that of the fixed shied 300 made of the plastic material. Thus, the metal chip guide tube 510 has higher heat dissipation efficiency, and the heat of the chips entering the metal chip guide tube 510 can be further dissipated in time through the metal chip guide tube 510. Optionally, the metal chip guide tube 510 may be made of 304 stainless steel, and the heat transfer coefficient of the metal chip guide tube 510 is 15 W/(m²·K).

In the present application, the fixed shield 300 is configured to not completely cover the metal chip guide tube 510, and the multiple ribs 312 are disposed between the fixed shield 300 and the metal chip guide tube 510. Thus, the heat dissipation effect of the metal chip guide tube 510 is improved, and the risk is reduced that the fixed shield 300 is melted and deformed, thereby prolonging the service life of the fixed shield 300 and the service life of the entire circular saw 100.

In some examples, the fixed shield 300 is provided with a guide portion 340 near the inlet 511 of the metal chip guide tube 510. The guide portion 340 is configured to guide the chips blown up in the cutting process of the circular saw blade 200 to the inlet 511. The guide portion 340 is the extension portion 5112 described above in the present application. A specific description is performed below by using the guide portion 340. As shown in FIG. 16, the guide portion 340 includes an extension portion 341. When the circular saw 100 cuts, the extension portion 341 extends from the bottom of the inlet 511 towards a first open end 410 of the movable shield 400. The extension portion 341 extends to the lower end of the inlet 511 of the metal chip guide tube 510 and includes a portion protruding from the lower end of the inlet 511. The first open end 410 of the movable shield 400 abuts against the cut material when the circular saw 100 cuts.

In some examples, the guide portion 340 is connected to or formed with a support portion 340. The support portion 342 is disposed on the lower side of the metal chip guide tube 510 and connected to the fixed shield 300. Thus, the support portion 342 can fix the metal chip guide tube 510 and the fixed shield 300 to support the metal chip guide tube 510. In some examples, the fixed shield 300 and the support portion 342 are integrally formed, and the support portion 342 is directly formed on the fixed shield 300 and extends inwards. Thus, the support portion 342 is made of the same plastic material as the fixed shield 300 so that the metal chip guide tube 510 can be directly disposed in the fixed shield 300 and supported by the fixed shield 300. In some examples, the support member 301 includes a portion disposed near the inlet 511. Optionally, the support portion 342 may be in contact with the support member 301. Optionally, the support portion 342 and the support member 301 may be two components spaced apart from each other.

In some examples, the guide portion 340 and the metal chip guide tube 510 are integrally formed. The guide portion 340 is directly formed on the inner side surface at the inlet 511 of the metal chip guide tube 510 and is connected to the metal chip guide tube 510, so as to be fixedly connected to the inside of the shield 300. In this case, the guide portion 340 is made of the same metal material as the metal chip guide tube 510. Thus, in the cutting process of the circular saw blade 200, when the chips collide with the guide portion 340, the guide portion 340 cannot be melted and deformed. In some examples, the guide portion 340 may not be integrally formed with the metal chip guide tube 510. The guide portion 340 is separately formed and fixedly connected to the metal chip guide tube 510.

As shown in FIG. 8, the movable shield 400 includes a first side 420, a second side 430, and a bottom 440 connecting the first side 420 to the second side 430. The distance between the first side 420 and the second side 430 is moderate so that when the circular saw blade 200 is assembled into the circular saw 100, the circular saw blade 200 is not in contact with the first side 420 or the second side 430. In addition, the distance between the first side 420 and the second side 430 is proper, thereby avoiding a large size of the circular saw 100 in the left and right direction.

When the circular saw 100 cuts, the movable shield 400 rotates clockwise based on the cutting depth of the circular saw blade 200. When the circular saw blade 200 cuts to the greatest depth, the rotation angle of the movable shield 400 is the largest. In this case, the guide portion 340 is in contact with the first side 420 of the movable shield 400 and the second side 430 of the movable shield 400. Specifically, a first end portion 421 of the first side 420 and a second end portion 431 of the second side 430 abut against the extension portion 341 of the guide portion 340.

As shown in FIG. 16, the entire guide portion 340 is in the shape of a flat plate. Specifically, the extension portion 341 included in the guide portion 340 is substantially in the shape of a flat plate. The guide portion 340 includes a slit 343 formed at the lower end of the guide portion 340 so that the circular saw blade 200 is allowed to enter the slit 343. The slit 343 is formed by extension portions 341 on the two sides. The width of the slit 343 is greater than the thickness of the circular saw blade 200 so that the circular saw blade 200 is not in contact with two sidewalls of the slit 343 during rotation. In addition, in the radial direction of the circular saw blade 200, the distance between the upper wall of the slit 343 and the center of the circular saw blade 200 is greater than the radius of the circular saw blade 200 so that the circular saw blade 200 is not in contact with the upper wall of the slit 343 during the rotation. Furthermore, the configuration of the slit 343 ensures the safety of the circular saw blade 200 during the rotation.

In some examples, the slit 343 may be a rectangular slit as shown in FIG. 16. In some examples, the slit 343 may be a triangular slit. In some examples, the slit 343 may be in an irregular shape. In addition, the slit 343 may be in any other shape that can prevent the upper wall and the two sidewalls from being in contact with the circular saw blade 200. The shape of the slit 343 is not limited in the present application.

The guide portions 340 protruding from the lower end of the inlet 511 are disposed on the two sides of the metal chip guide tube 510. Thus, the chips are guided to better enter the metal chip guide tube 510. In addition, the chips can be prevented from falling onto the movable shield 400 to a certain extent, thereby reducing the probability that the movable shield 400 is melted or deformed.

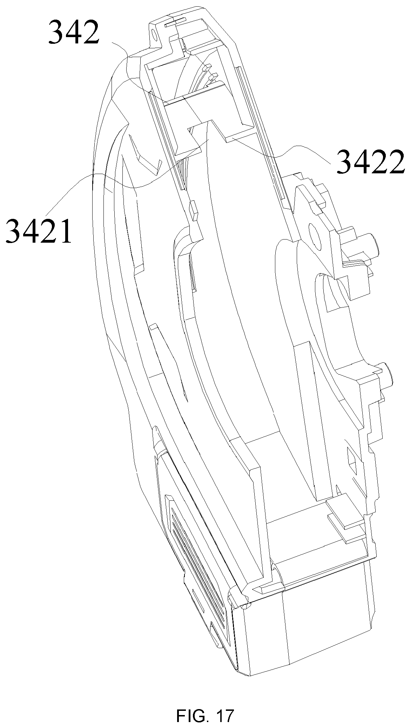

In some examples, as shown in FIGS. 16 and 17, a support portion slit 3421 is formed on the support portion 342. The width of the support portion slit 3421 is greater than the thickness of the circular saw blade 200 so that the circular saw blade 200 is not in contact with two sidewalls of the support portion slit 3421 during the rotation. In addition, in the radial direction of the circular saw blade 200, the distance between the upper wall of the support portion slit 3421 and the center of the circular saw blade 200 is greater than the radius of the circular saw blade 200 so that the circular saw blade 200 is not in contact with the upper wall of the support portion slit 3421 during the rotation. Furthermore, the configuration of the support portion slit 3421 ensures the safety of the circular saw blade 200 during the rotation. The shape of the support portion slit 3421 is not limited in the present application, and the support portion slit 3421 may be in any shape that meets the preceding condition.

In addition, a certain distance exists between the circular saw blade 200 and each of the upper wall and the two sidewalls of the support portion slit 3421, but the distance is not large. Thus, during the rotation of the circular saw blade 200, most of the chips are blocked by the support portion 342 and are guided into the metal chip guide tube 310 based on the guide portion 340, and only a small number of chips fall to the lower side of the base 110 after passing through the support portion slit 3421. Accordingly, the probability is reduced that the chips fall to the movable shield 400, the probability is reduced that the movable shield 400 is melted or deformed due to the high temperatures of the chips, and the service life of the movable shield 400 is prolonged. In some examples, the distance between the upper wall of the support portion slit 3421 and the center of the circular saw blade 200 is greater than 75 mm and less than or equal to 80 mm. Optionally, the distance between the upper wall of the support portion slit 3421 and the center of the circular saw blade 200 may be 76 mm. Optionally, the distance between the upper wall of the support portion slit 3421 and the center of the circular saw blade 200 may be 77.3 mm. Optionally, the distance between the upper wall of the support portion slit 3421 and the center of the circular saw blade 200 may be 78.5 mm.

In some examples, the distance between the bottom of the guide portion 340 and the center of the circular saw blade 200 is greater than 75 mm and less than or equal to 79 mm. Specifically, the distance between the bottom of the extension portion 341 in the guide portion 340 and the center of the circular saw blade 200 is greater than 75 mm and less than or equal to 79 mm. In addition, in some examples, the distance from the bottom of the extension portion 341 to the center of the circular saw blade 200 may also be less than or equal to the radius of the circular saw blade 200, which is not limited in the present application.

In some examples, in the present application, a specific description is performed by using an example in which the radius of the circular saw blade 200 is 75 mm. Then, the distance between the bottom of the support portion 342 and the center of the circular saw blade 200 is greater than or equal to 68 mm and less than or equal to 74 mm. Specifically, the distance between the bottom 3422 of the support portion 342 and the center of the circular saw blade 200 is greater than or equal to 68 mm and less than or equal to 74 mm. Optionally, the distance between the bottom 3422 and the center of the circular saw blade 200 is 69.5 mm. Optionally, the distance between the bottom 3422 and the center of the circular saw blade 200 is 70 mm. Optionally, the distance between the bottom 3422 and the center of the circular saw blade 200 is 71.1 mm. Optionally, the distance between the bottom 3422 and the center of the circular saw blade 200 is 73.5 mm. The radius of the circular saw blade 200 is 75 mm. The distance from the bottom 3422 of the support portion 342 to the center of the circular saw blade 200 is less than the radius of the circular saw blade 200. The support portion 342 includes left and right sides extending to the circular saw blade 200. Therefore, when the circular saw 100 cuts, most of the chips can be blocked by the support portion 342 and enter the metal chip guide tube 310 through the guide of the extension portion 341.

In some examples, as shown in FIGS. 1, 18, and 19, the circular saw 100 further includes a hook assembly 150. The circular saw 100 is a handheld power tool. When operating the circular saw 100, especially when working at a high altitude, the user often needs to hang the circular saw 100 through the hook assembly 150 for further use later after operating the circular saw 100 for a period of time. The hook assembly 150 may specifically include a connector 151 and a hook member 152. The connector 151 is used for connecting the hook assembly 150 to the circular saw 100, and the hook member 152 is used for hanging the circular saw 100.

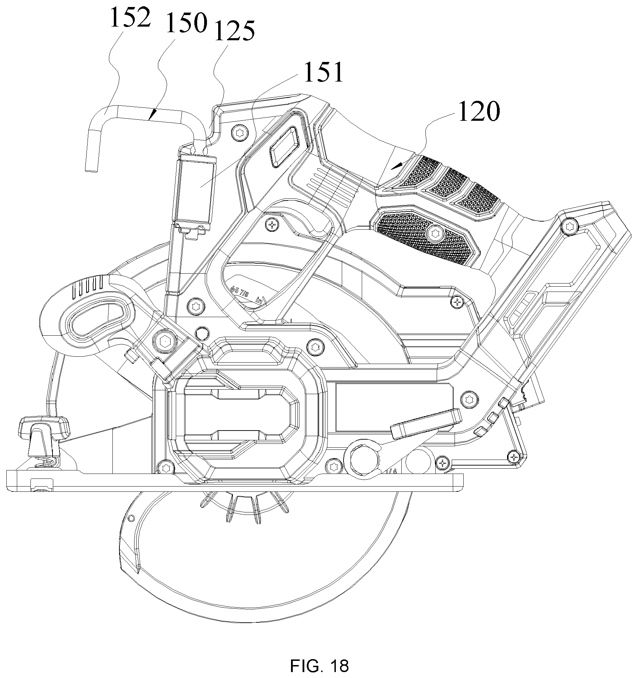

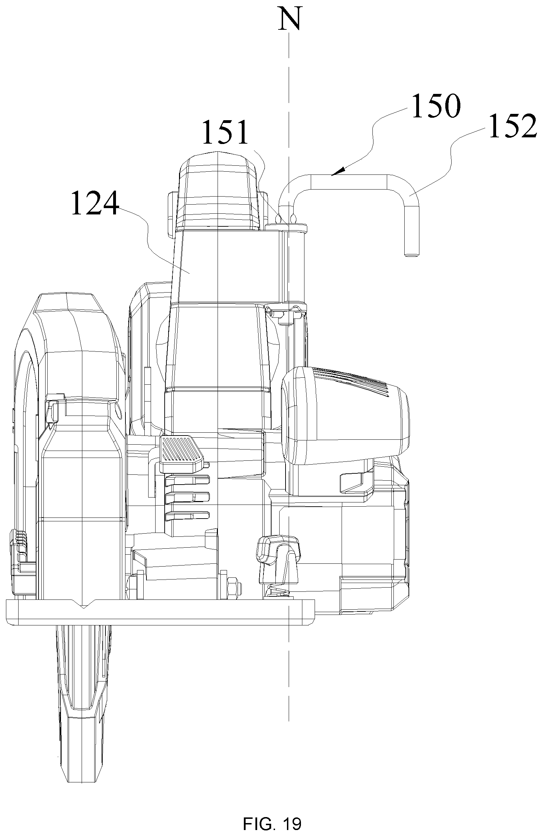

As shown in FIG. 18, the hook assembly 150 is disposed at the upper portion of the front end of the handle assembly 120 of the circular saw 100 and is located between the main handle 121 and the auxiliary handle 122. Thus, when the hook assembly 150 is used, it is more convenient to hang the circular saw 100, and other parts on the circular saw 100 do not prevent the hook assembly 150 from being hung. As shown in FIG. 19, a fixing member 124 is provided at the front end of the handle assembly 120. The fixing member 124 mates with the connector 151 so that the connector 151 is fixedly connected to the circular saw 100. Optionally, the fixing member 124 and the connector 151 are integrally formed. Optionally, the fixing member 124 and the connector 151 are formed separately and are fixedly connected to each other. The fixing member 124 may be fixedly connected to the handle assembly 120 based on a component such as a screw. In addition, the fixing member 124 may be integrally formed with the handle assembly 120. The present application does not impose any limitation in this aspect.

The hook member 152 is rotatable relative to the connector 151, and the hook member 152 is rotatably connected to the connector 151. Specifically, as shown in FIG. 19, the hook member 152 rotates about an axis N of the connector 151. The axis N is perpendicular to the rotation center of the circular saw blade 200. Optionally, the hook member 152 may be rotated 90 degrees. Optionally, the hook member 152 may be rotated 180 degrees. In addition, the hook member 152 may be rotated other degrees as required. The present application does not impose any limitation in this aspect.

As shown in FIG. 18, a recess 125 mating with the hook member 152 is further formed at the front end of the handle assembly 120. The recess 125 is used for accommodating the hook member 152. As shown in FIG. 1, when not in use, the hook member 152 is located in the recess 125, and the hook member 152 is at a first position where the hook member 152 is stored. In this case, when the user holds the main handle 121 and the auxiliary handle 122 with two hands respectively, the hook member 152 does not interfere with the user's hands, thereby facilitating the user's operation.

As shown in FIG. 18, when the hook member 152 needs to be used, the hook member 152 may be rotated 90 degrees from the first position shown in FIG. 1 to a second position shown in FIG. 18. When the hook member 152 is at the second position, the circular saw 100 may be hung. In addition, in the process where the circular saw 100 is hung, the front end of the auxiliary handle 122 and the front end of the fixed shield 300 may abut against the object to which the circular saw 100 is hung and are used as two support points that assist in hanging the circular saw 100. That is, the front side surface of the circular saw 100 abuts against the object to which the circular saw 100 is hung so that the circular saw 100 is hung more stably.

As shown in FIG. 19, when the hook member 152 needs to be used, the hook member 152 may be rotated 90 degrees again from the second position shown in FIG. 18 to a third position shown in FIG. 19. That is, the hook member 152 may be rotated 180 degrees from the first position shown in FIG. 1 to the third position shown in FIG. 19. In this case, the circular saw 100 may be hung. In addition, in the process where the circular saw 100 is hung, the side end of the auxiliary handle 122 and the side end of the driving mechanism 130 may abut against the object to which the circular saw 100 is hung and are used as two support points that assist in hanging the circular saw 100. That is, the left side surface of the circular saw 100 abuts against the object to which the circular saw 100 is hung so that the circular saw 100 is hung more stably.

The basic principles, main features, and advantages of this application are shown and described above. It is to be understood by those skilled in the art that the aforementioned examples do not limit the present invention in any form, and all technical solutions obtained through equivalent substitutions or equivalent transformations fall within the scope of the present invention as defined by the claims.

## Claims

1. A portable circular saw (100) for cutting metal, comprising:
a base (110) comprising a lower surface side abutting against a cut material; and
a cutter body (100a) at least partially supported on an upper surface side of the base;
wherein the cutter body comprises:
a circular saw blade (200) protruding towards the lower surface side through a window portion (111) provided on the base, wherein a protruding portion is configured to cut into the cut material;
a fixed shield (300) covering an outer circumferential side of the circular saw blade;
and
a metal chip guide tube (510), wherein the metal chip guide tube is disposed in the fixed shield, surrounds part of the outer circumferential side of the circular saw blade, and comprises a chip guide cavity (513) for guiding a chip;
wherein a portion of the metal chip guide tube is covered by the fixed shield;
**characterized by** an outer surface area of the metal chip guide tube is denoted as S1, and a surface area of the metal chip guide tube covered by the fixed shield is denoted as S2, where a ratio of S1 to S2 is higher than 1.

2. The portable circular saw according to claim 1, wherein the ratio of the outer surface area S1 of the metal chip guide tube to the surface area S2 of the portion of the metal chip guide tube covered by the fixed shield is higher than or equal to 1.2.

3. The portable circular saw according to claim 1, wherein the metal chip guide tube is fixed on the fixed shield by a support member (301).

4. The portable circular saw according to claim 3, wherein the support member is formed integrally with the fixed shield or are connected to the fixed shield.

5. The portable circular saw according to claim 3, wherein at least parts of the support member are disposed at two ends of a lower surface (5104) of the metal chip guide tube.

6. The portable circular saw according to claim 5, wherein the at least parts of the support member at the two ends of the lower surface are not in contact.

7. The portable circular saw according to claim 1, wherein at least part of a lower surface (5104) of the metal chip guide tube is exposed to air.

8. The portable circular saw according to claim 7, wherein the part of the lower surface exposed to air is a position where the chip commonly falls.

9. The portable circular saw according to claim 1, wherein an upper surface (5101), a left surface (5102), and a right surface (5103) of the metal chip guide tube abut against an inner surface of the fixed shield through ribs (312) disposed at intervals.

10. The portable circular saw according to claim 1, wherein thermal conductivity of the fixed shield is different from thermal conductivity of the metal chip guide tube.

11. The portable circular saw according to claim 1, wherein a heat transfer coefficient of the metal chip guide tube is 15 W/(m²·K).

12. The portable circular saw according to claim 1, wherein the metal chip guide tube is integrally formed.

13. The portable circular saw according to claim 1, wherein a ratio of an area of an inlet (511) of the metal chip guide tube to an area of a cross section of the metal chip guide tube located above the circular saw blade is higher than or equal to 2.

14. The portable circular saw according to claim 1, wherein an area of an inlet of the metal chip guide tube is larger than or equal to 600 mm².

15. The portable circular saw according to claim 1, further comprising a battery pack (140) configured to power the portable circular saw.

## Patentansprüche

1. Handkreissäge (100) zum Schneiden von Metall, umfassend:
eine Basis (110), die eine an einem zu schneidenden Material anliegende Unterseite umfasst; und
einen Sägekörper (100a), der zumindest teilweise auf einer Oberseite der Basis abgestützt ist;
wobei der Sägekörper Folgendes umfasst:
ein Kreissägeblatt (200), das durch einen an der Basis vorgesehenen Fensterabschnitt (111) zur Unterseite hin vorsteht, wobei ein vorstehender Abschnitt dazu eingerichtet ist, in das zu schneidende Material einzuschneiden;
eine ortsfeste Schutzhaube (300), die eine Außenumfangsseite des Kreissägeblatts abdeckt; und
ein metallisches Spanführungsrohr (510), wobei das metallische Spanführungsrohr in der ortsfesten Schutzhaube angeordnet ist, einen Teil der Außenumfangsseite des Kreissägeblatts umgibt und einen Spanführungshohlraum (513) zum Führen eines Spans umfasst;
wobei ein Abschnitt des metallischen Spanführungsrohrs von der ortsfesten Schutzhaube abgedeckt ist;
**dadurch gekennzeichnet, dass** ein Außenflächeninhalt des metallischen Spanführungsrohrs als S1 bezeichnet wird und ein Flächeninhalt des von der ortsfesten Schutzhaube abgedeckten metallischen Spanführungsrohrs als S2 bezeichnet wird, wobei ein Verhältnis von S1 zu S2 größer als 1 ist.

2. Handkreissäge nach Anspruch 1, wobei das Verhältnis des Außenflächeninhalts S1 des metallischen Spanführungsrohrs zu dem Flächeninhalt S2 des von der ortsfesten Schutzhaube abgedeckten Abschnitts des metallischen Spanführungsrohrs größer als oder gleich 1,2 ist.

3. Handkreissäge nach Anspruch 1, wobei das metallische Spanführungsrohr durch ein Stützelement (301) an der ortsfesten Schutzhaube befestigt ist.

4. Handkreissäge nach Anspruch 3, wobei das Stützelement einstückig mit der ortsfesten Schutzhaube ausgebildet oder mit der ortsfesten Schutzhaube verbunden ist.

5. Handkreissäge nach Anspruch 3, wobei zumindest Teile des Stützelements an zwei Enden einer Unterseite (5104) des metallischen Spanführungsrohrs angeordnet sind.

6. Handkreissäge nach Anspruch 5, wobei die an den zwei Enden der Unterseite angeordneten Teile des Stützelements einander nicht berühren.

7. Handkreissäge nach Anspruch 1, wobei zumindest ein Teil einer Unterseite (5104) des metallischen Spanführungsrohrs der Luft ausgesetzt ist.

8. Handkreissäge nach Anspruch 7, wobei der der Luft ausgesetzte Teil der Unterseite eine Stelle ist, auf die der Span üblicherweise fällt.

9. Handkreissäge nach Anspruch 1, wobei eine Oberseite (5101), eine linke Fläche (5102) und eine rechte Fläche (5103) des metallischen Spanführungsrohrs über in Abständen angeordnete Rippen (312) an einer Innenfläche der ortsfesten Schutzhaube anliegen.

10. Handkreissäge nach Anspruch 1, wobei sich eine Wärmeleitfähigkeit der ortsfesten Schutzhaube von einer Wärmeleitfähigkeit des metallischen Spanführungsrohrs unterscheidet.

11. Handkreissäge nach Anspruch 1, wobei ein Wärmeübergangskoeffizient des metallischen Spanführungsrohrs 15 W/(m²·K) beträgt.

12. Handkreissäge nach Anspruch 1, wobei das metallische Spanführungsrohr einstückig ausgebildet ist.

13. Handkreissäge nach Anspruch 1, wobei ein Verhältnis eines Flächeninhalts eines Einlasses (511) des metallischen Spanführungsrohrs zu einem Flächeninhalt eines oberhalb des Kreissägeblatts befindlichen Querschnitts des metallischen Spanführungsrohrs größer als oder gleich 2 ist.

14. Handkreissäge nach Anspruch 1, wobei ein Flächeninhalt eines Einlasses des metallischen Spanführungsrohrs größer als oder gleich 600 mm² ist.

15. Handkreissäge nach Anspruch 1, ferner umfassend einen Akkupack (140), der zur Stromversorgung der Handkreissäge eingerichtet ist.

## Revendications

1. Scie circulaire portative (100) destinée à couper du métal, comprenant :
une base (110) comprenant une face inférieure venant en appui contre un matériau à couper ; et
un corps de scie (100a) supporté au moins partiellement sur une face supérieure de la base ;
dans laquelle le corps de scie comprend :
une lame de scie circulaire (200) faisant saillie vers la face inférieure à travers une portion de fenêtre (111) prévue sur la base, dans laquelle une portion en saillie est configurée pour pénétrer dans le matériau à couper ;
un capot de protection fixe (300) recouvrant un côté circonférentiel extérieur de la lame de scie circulaire ; et
un tube métallique de guidage de copeaux (510), dans laquelle le tube métallique de guidage de copeaux est disposé dans le capot de protection fixe, entoure une partie du côté circonférentiel extérieur de la lame de scie circulaire et comprend une cavité de guidage de copeaux (513) destinée à guider un copeau ;
dans laquelle une portion du tube métallique de guidage de copeaux est recouverte par le capot de protection fixe ;
**caractérisée en ce qu'**une aire de surface extérieure du tube métallique de guidage de copeaux est désignée par S1, et une aire de surface du tube métallique de guidage de copeaux recouverte par le capot de protection fixe est désignée par S2, un rapport de S1 à S2 étant supérieur à 1.

2. Scie circulaire portative selon la revendication 1, dans laquelle le rapport de l'aire de surface extérieure S1 du tube métallique de guidage de copeaux à l'aire de surface S2 de la portion du tube métallique de guidage de copeaux recouverte par le capot de protection fixe est supérieur ou égal à 1,2.

3. Scie circulaire portative selon la revendication 1, dans laquelle le tube métallique de guidage de copeaux est fixé au capot de protection fixe par un élément de support (301).

4. Scie circulaire portative selon la revendication 3, dans laquelle l'élément de support est formé d'un seul tenant avec le capot de protection fixe ou est relié au capot de protection fixe.

5. Scie circulaire portative selon la revendication 3, dans laquelle au moins des parties de l'élément de support sont disposées à deux extrémités d'une surface inférieure (5104) du tube métallique de guidage de copeaux.

6. Scie circulaire portative selon la revendication 5, dans laquelle lesdites parties de l'élément de support situées aux deux extrémités de la surface inférieure ne sont pas en contact entre elles.

7. Scie circulaire portative selon la revendication 1, dans laquelle au moins une partie d'une surface inférieure (5104) du tube métallique de guidage de copeaux est exposée à l'air.

8. Scie circulaire portative selon la revendication 7, dans laquelle la partie de la surface inférieure exposée à l'air est un emplacement sur lequel le copeau tombe habituellement.

9. Scie circulaire portative selon la revendication 1, dans laquelle une surface supérieure (5101), une surface gauche (5102) et une surface droite (5103) du tube métallique de guidage de copeaux viennent en appui contre une surface intérieure du capot de protection fixe par l'intermédiaire de nervures (312) disposées à intervalles.

10. Scie circulaire portative selon la revendication 1, dans laquelle une conductivité thermique du capot de protection fixe est différente d'une conductivité thermique du tube métallique de guidage de copeaux.

11. Scie circulaire portative selon la revendication 1, dans laquelle un coefficient de transfert thermique du tube métallique de guidage de copeaux est de 15 W/(m²·K).

12. Scie circulaire portative selon la revendication 1, dans laquelle le tube métallique de guidage de copeaux est formé d'un seul tenant.

13. Scie circulaire portative selon la revendication 1, dans laquelle un rapport d'une aire d'une entrée (511) du tube métallique de guidage de copeaux à une aire d'une section transversale du tube métallique de guidage de copeaux située au-dessus de la lame de scie circulaire est supérieur ou égal à 2.

14. Scie circulaire portative selon la revendication 1, dans laquelle une aire d'une entrée du tube métallique de guidage de copeaux est supérieure ou égale à 600 mm².

15. Scie circulaire portative selon la revendication 1, comprenant en outre un bloc-batterie (140) configuré pour alimenter la scie circulaire portative.
